# EUROPÄISCHE PATENTSCHRIFT

(11) **EP 2 379 902 B1**
(45) Veröffentlichungstag und Bekanntmachung des Hinweises auf die Patenterteilung: **19.03.2014**
(21) Anmeldenummer: 09803729.4
(22) Anmeldetag: 18.12.2009
(51) Int. Cl.: F16C 13/02, F16C 35/02

(54) **WALZE UND EIN WALZGERÜST ZUM WALZEN VON WALZGUT**
ROLL AND A ROLL STAND FOR ROLLING STOCK TO BE ROLLED
ROULEAU ET CAGE DE LAMINOIR POUR LAMINER DES MATIÈRES À LAMINER

(30) Priorität: 20.12.2008 DE 102008064303; 12.08.2009 DE 102009037274
(43) Veröffentlichungstag der Anmeldung: 26.10.2011
(73) Patentinhaber: SMS Siemag AG, 40237 Düsseldorf (DE)
(72) Erfinder: KELLER, Karl, 57271 Hilchenbach (DE); ROEINGH, Konrad, 57271 Hilchenbach (DE)
(74) Vertreter: Klüppel, Walter
(86) Internationale Anmeldenummer: PCT/EP2009/009139
(87) Internationale Veröffentlichungsnummer: WO 2010/069590

(56) Entgegenhaltungen:
- WO-A1-93/20359
- AT-B- 385 437
- DE-A1- 2 439 017
- DE-A1-102006 024 136
- DE-C- 736 228
- US-A- 2 072 448
- US-A- 3 352 140
- US-A- 4 006 993

## Beschreibung

Die Erfindung bezieht sich auf eine Walze, im Folgenden auch als Walzwerkswalze bezeichnet, zum Walzen von Walzgut in einem Walzwerk, aufweisend einen Walzengrundkörper und zwei zum Walzengrundkörper abgesetzte Wellenzapfen, von denen mindestens ein Wellenzapfen mit einer verdrehsicher aufgesetzten Zapfenbuchsen ausgestattet ist. Die Erfindung betrifft weiterhin ein Walzgerüst, in welchem die Walze gelagert ist.

Es sind Walzwerkswalzen mit zwei Walzenzapfen bekannt, die in axialer Richtung zumindest bereichsweise eine über eine Passfeder verdrehsicher aufgezogene Zapfenbuchse tragen. Gemäß der DE 26 12 744 A1 sind die Passfedern außerhalb des Bereichs der auf die Zapfenbuchse einwirkenden Walzdruckkraft angeordnet. Auch aus der WO 2007 134655 A2 ist eine Walzwerkswalze mit einer mittels einer Passfeder verdrehsicher aufgezogenen Zapfenbuchse bekannt. Hierbei ist die Passfeder oder deren Aufnahmenut sehr nahe an der den Außenbereich der Druckkraftübertragung begrenzenden Rötscher-Linie angebracht. Die Ausdehnung der Passfedern ist in radialer Richtung größer als deren Ausdehnung in axialer Richtung. Durch diese Maßnahme soll sich eine kurze Bauform der Walzen ergeben. Ferner wird hierdurch die Breite des Walzgerüsts reduziert, was mit schmaleren Fundamenten, schmaleren Walzwerkshallen und Walzenwerkstätten einhergeht.

Die Druckschrift DE 24 39 017 A1 beschreibt eine Profilwalzmaschine zur Bearbeitung von Metallbändern mit auswechselbaren Profilwalzen.

Aus der US 2,072,448 ist ein Walzwerk mit fliegend gelagerten Walzen bekannt.

Die Erfindung der DE 736 228 C betrifft ein Gleitlager für Walzwerke, bei dem die Laufbuchse lösbar auf dem Walzenzapfen aufgeschoben ist.

Andererseits ist aus der DE 100 07 383 B4 eine wasserkühlbare Ofenrolle zum Fördern von Dünnbrammen bekannt, die insbesondere in der Heizzone eines Rollenherdofens eingesetzt wird. Die Ofenrolle umfasst eine in Drehung antreibbare, außerhalb des Ofens gelagerte Welle mit innenliegenden Kanälen zum Hindurchleiten von Kühlwasser. Die Welle besitzt an den Aufnahmebereichen von die Dünnbrammen transportierenden Tragringen äußere Sitzflächen unter Ausbildung eines polygonartigen Querschnitts, wobei jeder Tragring mit dazu polygonartig, formschlüssigen inneren Passflächen ausgebildet ist. Der polygonartige Querschnitt der Welle kann sich auch über die tragende Länge der Welle erstrecken.

Es ist die Aufgabe der Erfindung, eine bekannte Walze sowie ein bekanntes Walzgerüst zum Walzen von Walzgut dahingehend weiter zu bilden, dass eine alternative formschlüssige Verbindung zwischen dem Wellenzapfen und einer auf dem Wellenzapfen aufgesetzten Zapfenbuchse bereitgestellt und gleichzeitig die Zapfenbuchse gegen axiales Verschieben gesichert wird.

Erfindungsgemäß wird diese Aufgabe bei einem Lager der eingangs genannten Art dadurch gelöst, dass der Wellenzapfen und die Zapfenbuchse über eine Polygonverbindung miteinander verbunden sind.

Gegenüber einer herkömmlichen Verbindung zwischen dem Wellenzapfen und der Zapfenbuchse mittels Passfedern hat die erfindungsgemäße Lösung den Vorteil, dass weniger Einzelteile erforderlich sind, wodurch sich die Fertigungskosten verringern. Insbesondere müssen keine Nuten in den Walzen, den Zapfenbuchsen und den Druckschulterringen eingefräst werden. Durch moderne Herstellungsverfahren auf CNC-Drehmaschinen mit einer "Unrunddreheinrichtung" lassen sich Wellenzapfen und Zapfenbuchsen mit polygonalen Querschnitten herstellen. Durch heute verfügbare FEM-Berechnungsverfahren (FEM =Finite-Elemente-Methode) lassen sich beliebige Formen von Polygonen betriebsfest auslegen.

Vorteilhafte Weiterbildungen ergeben sich aus den Unteransprüchen und der Beschreibung in Verbindung mit den Zeichnungen.

Erfindungsgemäß wird mit Vorteil vorgesehen, dass der Wellenzapfen an seinem äußeren Ende eine Stufe aufweist und dass der Wellenzapfen im Bereich der Stufe eine polygonale Außenkontur aufweist, in die eine zugehörige polygonale Innenkontur der Zapfenbuchse formschlüssig eingreift.

In einer vorteilhaften Weiterbildung dieser Ausgestaltung ist vorgesehen, dass der Wellenzapfen an seinem äußeren Ende einen Druckschulterring trägt, der mit einer polygonalen Innenkontur in die polygonale Außenkontur der Stufe des Wellenzapfens formschlüssig eingreift. Bei dieser Lösung wirken die polygonalen Formen auf der Innenseite der Zapfenbuchse und des Druckschulterrings jeweils mit derselben polygonalen äußeren Kontur des Wellenzapfens im Bereich der an diesem angebrachten Stufe zusammen. Diese Lösung bietet somit den Vorteil, dass nur eine einzige polygonale Form erforderlich ist, dass aber andererseits die Verbindungen zwischen der Zapfenbuchse und dem Druckschulterring einerseits und dem Wellenzapfen andererseits in axialer Richtung der Walze hintereinander angeordnet sind.

Eine hierzu alternative Lösung besteht darin, dass der Wellenzapfen an seinem äußeren Ende einen Druckschulterring trägt, der mit einer polygonalen Außenkontur formschlüssig in eine polygonale Innenkontur der Zapfenbuchse eingreift, die die Zapfenbuchse im Bereich einer innenseitigen Stufe bildet. Andererseits greift der Druckschulterring mit seiner polygonen Außenkontur in eine zu dieser formschlüssige Innenkontur einer Zapfenbuchse im Bereich der Stufe ein.

Bei dieser Lösung sind zwei jeweils durch polygonale Konturen gebildete Formschlüsse erforderlich. Dies ist aufwendiger in der Herstellung, hat aber den Vorteil, dass die Walze bei dieser Lösung kürzer baut als bei der oben beschriebenen Lösung, gemäß der die Zapfenbuchse und der Druckschulterring mit derselben polygonalen äußeren Form des Wellenzapfens axial hintereinander zusammenwirken.

In einer weiteren Ausführung der Erfindung sind die Zapfenbuchse und der Druckschulterring einteilig miteinander ausgebildet, so dass eine geringere Anzahl von Einzelteilen erforderlich ist.

Die Erfindung bezieht sich auch auf eine Walzwerkswalze, die mit wenigstens einem Lager der oben beschriebenen Form ausgestaltet ist.

Nachstehend wird die Erfindung in Ausführungsbeispielen näher erläutert.

Es zeigen:
- Fig. 1: zwei Ausführungsbeispiele einer in einem Einbaustück gelagerten Walzwerkswalze im Längsschnitt, wobei die erste Ausführungsform unterhalb der Längsachse und die zweite Ausführungsform oberhalb der Längsachse der Walzwerkswalze dargestellt ist,
- Fig. 2: eine weitere Ausgestaltung einer im Längsschnitt dargestellten Walz-werkswalze und
- Fig. 3: eine schematische Darstellung eines Querschnitts entlang einer Schnittlinie A - A aus Fig. 1.

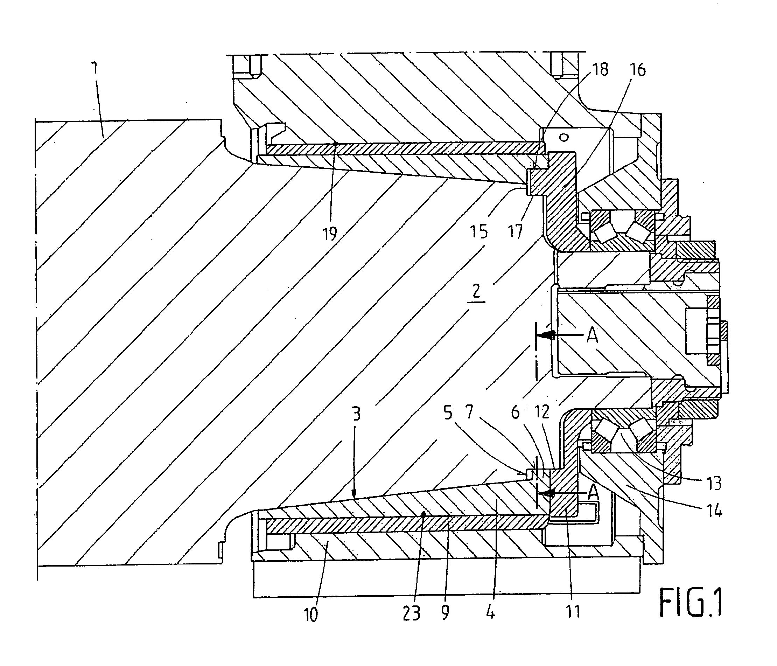

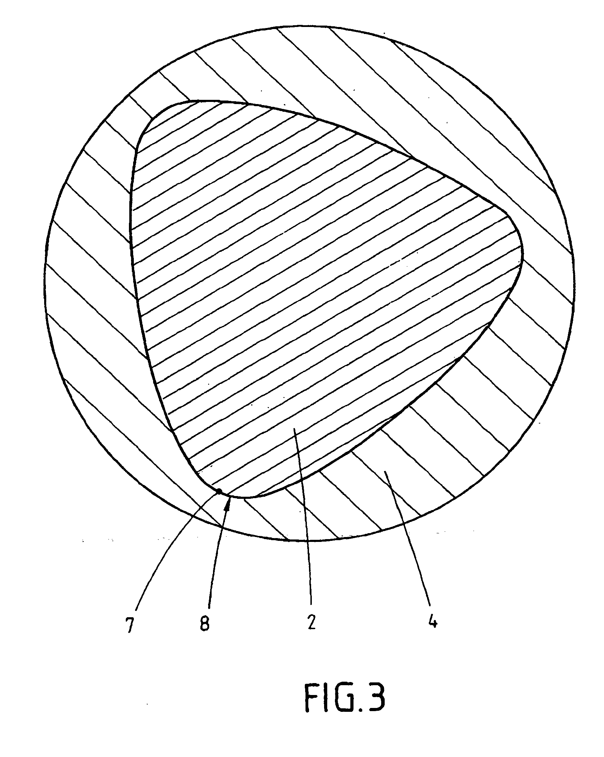

Eine Walzwerkswalze 1 (Fig. 1) weist einen Wellenzapfen 2 auf, der eine konische Außenwandung 3 hat. Alternativ kann eine zylindrische Außenwandung vorgesehen sein. Um den Wellenzapfen 2 herum erstreckt sich formschlüssig eine Zapfenbuchse 4. Zu seinem freien Ende hin ist der Wellenzapfen 2 mit einer Stufe 5 ausgestattet, über die sich die Zapfenbuchse 4 mit einem Absatz 6 erstreckt. Die Außenwandung 3 des Walzenzapfens 2 hat im Bereich der Stufe 5 eine polygonale Kontur 7 in radialer Richtung, beispielsweise, wie in Fig. 3 dargestellt, eine Dreiecksform mit abgerundeten Ecken 8 (Fig. 3). Um die Außenwandung 3 herum erstreckt sich die Zapfenbuchse 4 mit ihrem Absatz 6 ebenfalls formschlüssig mit ihrer Innenwandung 8, d. h. mit derselben polygonalen Form. Anstelle der Dreiecksform können beliebige andere polygonale FormenNielecke zum Einsatz kommen, also beispielsweise Vierecks- oder Fünfecksformen, etc..

Durch die polygonale Formgebung sind der Wellenzapfen 2 und die Zapfenbuchse 4 zueinander gegen Verdrehen gesichert. Die Zapfenbuchse 4 ist von einer ortsfesten Lagerbuchse 9 umgeben, die ihrerseits in einem Einbaustück 10 gehalten wird.

Ebenfalls formschlüssig mit der polygonalen Außenkontur 7 des Wellenzapfens 2 sitzt auf diesem zur Außenseite hin ein Druckschulterring 11, der eine innere polygonale Kontur 12 hat, die an die Kontur 7 des Wellenzapfens 4 anschließt. Über Kegelrollenlager 13 und einen Abschlussdeckel 14 ist die Walze 1 in dem Einbaustück 10 gelagert.

In einer alternativen Ausgestaltung ist der Wellenzapfen 2 über eine Stufe 15 mit einem Druckschulterring 16 durch eine polygonale Kontur 17 formschlüssig verbunden, wobei die Kontur 17 beispielsweise dieselbe Form wie die Kontur 7 haben kann.

Über eine zweite polygonale Kontur 18 ist in dieser Ausgestaltung eine Zapfenbuchse 4 mit ihrer Innenwandung formschlüssig mit der Außenwandung des Druckschulterrings 16 mit diesem verbunden, so dass in dieser Ausführungsform zwei polygonale Konturen 17, 18 im Unterschied zu der einzigen polygonalen Kontur 7 gemäß der ersten Ausführungsform erforderlich sind, um eine formschlüssige Verbindung zwischen dem Wellenzapfen 2 und der Zapfenbuchse 19 herzustellen. Andererseits weist diese Ausführungsform den Vorteil auf, dass sie kürzer baut als die erste Ausführungsform.

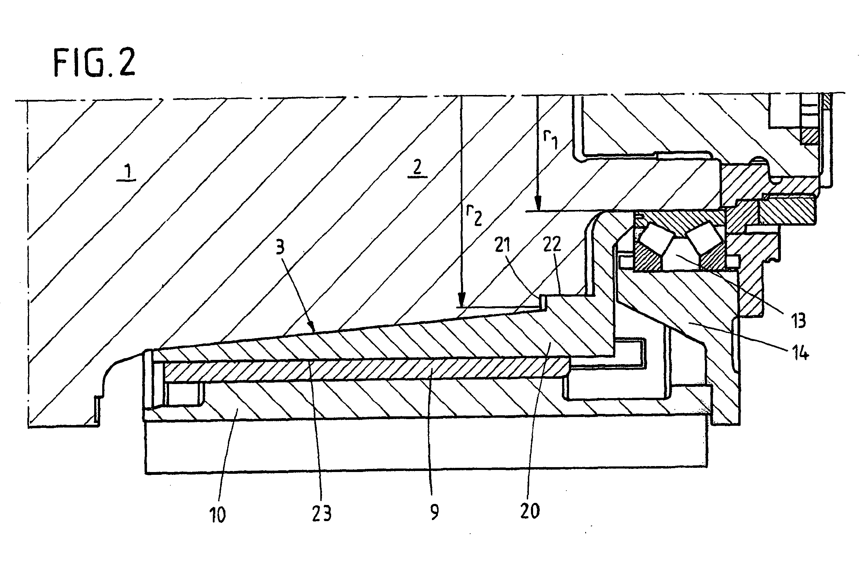

In einer weiteren Ausführungsform (Fig.2) sind eine Zapfenbuchse und ein Druckschulterring als einteiliges Bauelement 20 ausgebildet, das mit dem Wellenzapfen 2 eine Stufe 21 bildet, wobei die Stufe eine polygonale Kontur 22 hat, die der Form der Innenwand des Bauelements 20 und der Außenwand des Wellenzapfens 2 entspricht. Diese Ausgestaltung der Erfindung hat den Vorteil, dass nur eine einzige polygonale Kontur 22 zur formfesten Verbindung zwischen dem Wellenzapfen 2 und der Zapfenbuchse ausreichend ist.

Die Stufe 21 kann sich wie ebenso auch die Stufen 5 und 15 über einen Radienbereich zwischen einem minimalen Radius r₁ und einem maximalen Radius r₂ erstrecken.

### Bezugszeichenliste

- 1: Walzwerkswalze
- 2: Wellenzapfen
- 3: Außenwandung
- 4: Zapfenbuchse
- 5: Stufe
- 6: Absatz
- 7: polygonale Kontur
- 8: abgerundete Ecken
- 9: Lagerbuchse
- 10: Einbaustück
- 11: Druckschulterring
- 12: polygonale Kontur
- 13: Kegelrollenlager
- 14: Abschlussdeckel
- 15: Stufe
- 16: Druckschulterring
- 17: polygonale Kontur
- 18: polygonale Kontur
- 19: Schmierfilm
- 20: einteiliges Bauelement
- 21: Stufe
- 22: polygonale Kontur

## Patentansprüche

1. Walze zum Walzen von Walzgut in einem Walzwerk, aufweisend einen Walzengrundkörper (1), und
zwei zum Walzengrundkörper (1) abgesetzte Wellenzapfen (2), von denen mindestens ein Wellenzapfen (2) mit einer aufgesetzten Zapfenbuchse (4) ausgestattet ist, und
der Wellenzapfen (2) und die Zapfenbuchse (4) über eine Polygonverbindung miteinander verbunden sind, und
der Wellenzapfen (2) an seinem äußeren Ende eine Stufe (5) aufweist,
**dadurch gekennzeichnet, dass**
die Zapfenbuchse (4) sich über die Stufe (5) mit einem Absatz (6) erstreckt,
der Wellenzapfen (2) im Bereich der Stufe (5) eine polygonale Außenkontur (7) aufweist, in die eine zugehörige polygonale Innenkontur des Absatzes (6) der Zapfenbuchse (4) formschlüssig eingreift, um die Polygonverbindung zu bilden, und
der Wellenzapfen (2) an seinem äußeren Ende einen Druckschulterring (11) trägt, der mit einer polygonalen Innenkontur (12) in die polygonale Außenkontur der Stufe (5) des Wellenzapfens (2) formschlüssig eingreift.

2. Walze zum Walzen von Walzgut in einem Walzwerk, aufweisend einen Walzengrundkörper (1), und
zwei zum Walzengrundkörper (1) abgesetzte Wellenzapfen (2), von denen mindestens ein Wellenzapfen (2) mit einer aufgesetzten Zapfenbuchse (4) ausgestattet ist, und
der Wellenzapfen (2) und die Zapfenbuchse (4) über eine Polygonverbindung miteinander verbunden sind,
**dadurch gekennzeichnet, dass**
der Wellenzapfen (2) an seinem äußeren Ende einen Druckschulterring (16) trägt, der mit einer polygonalen Innenkontur (12) in die polygonale Außenkontur (17) einer Stufe (15) des Wellenzapfens (2) formschlüssig eingreift, und
der Druckschulterring (16) mit einer polygonalen Außenkontur (18) formschlüssig in eine polygonale Innenkontur der Zapfenbuchse (4) eingreift, die die Zapfenbuchse (4) gegenüberliegend in dem Bereich der innenseitigen Stufe (15) des Wellenzapfens (2) bildet.

3. Walze nach Anspruch 1,
**dadurch gekennzeichnet,**
**dass** die Zapfenbuchse (4) und der Druckschulterring (16) als einteiliges Bauelement (20) ausgebildet sind.

4. Walzgerüst mit
Walzenständern;
in den Walzenständern geführten Einbaustücken (10);
in Bohrungen in den Einbaustücken (19) integrierten Lagerbuchsen (9); mindestens einer Walze nach einem der Ansprüche 1 bis 3 mit einem abgesetzten Wellenzapfen (2) und einer verdrehsicher auf dem Wellenzapfen (2) aufgesetzten Zapfenbuchse (4); und
einem Schmierfilm (23) zwischen der Lagerbuchse (9) und der Zapfenbuchse (4).

## Claims

1. Roll for the rolling of rolling stock in a rolling mill, comprising
a roll base body (1), and
two shaft pins (2), which are stepped relative to the roll base body (1) and of which at least one shaft pin (2) is equipped with a pin bush (4) placed on the pin and
the shaft pin (2) and the pin bush (4) are connected together by way of a polygon connection, and
the shaft pin (2) has a step (5) at its outer end,
**characterised in that**
the pin bush (4) extends over the step (5) by a shoulder (6),
the shaft pin (2) has in the region of the step (5) a polygonal outer profile (7) in which an associated polygonal inner profile of the shoulder (6) of the pin bush (4) mechanically positively engages in order to form the polygon connection, and
the shaft pin (2) carries at its outer end a pressure shoulder ring (11) which mechanically positively engages by a polygonal inner profile (12) in the polygonal outer profile of the step (5) of the shaft pin (2).

2. Roll for the rolling of rolling stock in a rolling mill, comprising
a roll base body (1), and
two shaft pins (2), which are stepped relative to the roll base body (1) and of which at least one shaft pin (2) is equipped with a pin bush (4) placed on the pin, and
the shaft pin (2) and the pin bush (4) are connected together by way of a polygon connection,
**characterised in that**
the shaft pin (2) carries at its outer end a pressure shoulder ring (16) which mechanically positively engages by a polygon inner profile (12) in the polygonal outer profile (17) of a step (15) of the roll pin (2), and
the pressure shoulder ring (16) mechanically positively engages by a polygonal outer profile (18) in a polygonal inner profile of the pin bush (4), which the pin bush (4) forms oppositely in the region of the step (15), which is at the inner side, of the shaft pin (2).

3. Roll according to claim 1, **characterised in that** the pin bush (4) and the pressure shoulder ring (16) are constructed as an integral component (20).

4. Roll stand with
roll housings;
chocks (10) guided in the roll stands;
bearing bushes (9) integrated in bores in the chocks (19);
at least one roll according to any one of claims 1 to 3 with a stepped roll pin (2) and a pin
bush (4) placed on the roll pin (2) to be secure against turning; and
a lubricating film (23) between the bearing bush (9) and the pin bush (4).

## Revendications

1. Cylindre pour le laminage d'une matière à laminer dans un laminoir, présentant
un corps de base de laminage (1) et
deux tourillons d'arbre (2) décalés par rapport au corps de base de laminage (1), au moins un des tourillons d'arbre (2) étant équipé d'une douille de tourillon (4) appliquée par le haut, et
le tourillon d'arbre (2) et la douille de tourillon (4) étant reliés l'un à l'autre via une liaison polygonale, et
le tourillon d'arbre (2) présentant un gradin (5) à son extrémité externe,
**caractérisé en ce que**
la douille de tourillon (4) s'étend par-dessus le gradin (5) avec un épaulement (6),
le tourillon d'arbre (2) présente un contour externe polygonal (7) dans la zone du gradin (5), dans lequel vient s'insérer par complémentarité de forme un contour interne polygonal correspondant de l'épaulement (6) de la douille de tourillon (4), pour former la liaison polygonale, et
le tourillon d'arbre (2) porte, à son extrémité externe, un épaulement annulaire résistant à la pression (11) qui vient s'insérer par complémentarité de forme, avec un contour interne polygonal (12) dans le contour externe polygonal du gradin (5) du tourillon d'arbre (2).

2. Cylindre pour le laminage d'une matière à laminer dans un laminoir, présentant
un corps de base de laminage (1) et
deux tourillons d'arbre (2) décalés par rapport au corps de base de laminage (1), au moins un des tourillons d'arbre (2) étant équipé d'une douille de tourillon (4) appliquée par le haut, et
le tourillon d'arbre (2) et la douille de tourillon (4) étant reliés l'un à l'autre via une liaison polygonale,
**caractérisé en ce que**
le tourillon d'arbre (2) porte, à son extrémité externe, un épaulement annulaire résistant à la pression (16) qui vient s'insérer par complémentarité de forme, avec un contour interne polygonal (12), dans le contour externe polygonal (17) d'un gradin (15) du tourillon d'arbre (2), et
l'épaulement annulaire résistant à la pression (16) vient s'insérer par complémentarité de forme avec un contour externe polygonal (18) dans un contour interne polygonal de la douille de tourillon (4), que forme la douille de tourillon (4) à l'opposé dans la zone du gradin interne (15) du tourillon d'arbre (2).

3. Cylindre selon la revendication 1,
**Caractérisé**
**en ce que** la douille de tourillon (4) et l'épaulement annulaire résistant à la pression (16) sont obtenus sous la forme d'un élément (20) réalisé en une seule pièce.

4. Cage de laminoir comprenant
des montants de cage ;
des empoises (10) guidées dans les montants de cage ;
des douilles de palier (9) intégrées dans des alésages pratiqués dans les empoises (19) ;
au moins un cylindre selon l'une quelconque des revendications 1 à 3, comprenant un tourillon d'arbre décalé (2) et une douille de tourillon (4) appliquée en antirotation par le haut sur le tourillon d'arbre (2) ; et
une pellicule lubrifiante (23) entre la douille de palier (9) et la douille de tourillon (4).
